(19) Europäisches Patentamt / European Patent Office / Office européen des brevets

(11) **EP 2 804 148 A2**

(12) **EUROPEAN PATENT APPLICATION**

(43) Date of publication:
**19.11.2014 Bulletin 2014/47**

(51) Int Cl.:
***G06T 7/00*** *(2006.01)*

(21) Application number: **14168351.6**

(22) Date of filing: **14.05.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **17.05.2013 JP 2013105456
31.03.2014 JP 2014074065**

(71) Applicant: **CANON KABUSHIKI KAISHA
Ohta-ku
Tokyo 146-8501 (JP)**

(72) Inventor: **Handa, Soichiro
Ohta-ku, Tokyo (JP)**

(74) Representative: **Houle, Timothy James
Canon Europe Ltd
European Patent Department
3 The Square
Stockley Park
Uxbridge, Middlesex UB11 1ET (GB)**

(54) **Computation apparatus, program, and image pickup system**

(57)    A computation apparatus for calculating information of a subject includes: a calculation unit (710) configured to calculate a spatial distribution of a first first-order phase value, a spatial distribution of a second first-order phase value, and a spatial distribution of a first-order measurement target value, by using the subject data; a calculation unit (720) configured to calculate an error correction function including the first first-order phase value and the second first-order phase value as variables, by using information of the spatial distribution of the first first-order phase value, information of the spatial distribution of the second first-order phase value, and information of the spatial distribution of the first-order measurement target value; and a calculation unit (730) configured to calculate information of a spatial distribution of a second-order measurement target value, corresponding to a spatial distribution obtained by correcting the spatial distribution of the first-order measurement target value.

## FIG. 1

```
                          7
┌──────────────────────────────────────────────┐
│  ┌────────────────────────────────────────┐   │
│  │ CALCULATION UNIT CONFIGURED TO         │   │
│  │ CALCULATE FIRST-ORDER PHASE            │   │
│  │ DISTRIBUTIONS (FIRST AND SECOND) AND   │──┼── 710
│  │ FIRST-ORDER MEASUREMENT TARGET         │   │
│  │ DISTRIBUTION BY USING SUBJECT DATA     │   │
│  └────────────────────────────────────────┘   │
│  ┌────────────────────────────────────────┐   │
│  │ CALCULATION UNIT CONFIGURED TO         │──┼── 720
│  │ CALCULATE ERROR CORRECTION FUNCTION    │   │
│  └────────────────────────────────────────┘   │
│  ┌────────────────────────────────────────┐   │
│  │ CALCULATION UNIT CONFIGURED TO         │   │
│  │ CALCULATE SECOND-ORDER                 │──┼── 730
│  │ MEASUREMENT TARGET VALUE               │   │
│  └────────────────────────────────────────┘   │
└──────────────────────────────────────────────┘
```

**Description**

BACKGROUND OF THE INVENTION

Field of the Invention

The present invention relates to a computation apparatus for calculating information of a subject from a periodic pattern, a program, and an image pickup system.

Description of the Related Art

Using interferometry to extract information, such as a shape of a subject or a refractive index, by an analysis on an interference pattern of light, is widely used these days. Since phase information of reflected light, or transmitted light, from the subject is detected as a deformation of the interference pattern in interferometry, an image of the detected interference pattern can be analyzed to obtain the phase information. An amount directly calculated by the analysis is generally a phase of the interference pattern at each position (pixel).

The above-described analysis can be performed by not only a one-dimensional pattern such as a so-called vertical stripe or horizontal stripe but also a grid pattern, or other two-dimensional patterns. For that reason, a pattern in general which is formed by the interference is referred to as an interference pattern in the present invention and the present specification.

It is also possible to calculate a phase of a periodic pattern by using a periodic pattern formed without using the interference, instead of the interference pattern. Hereinafter, the analysis on the above-described periodic pattern is referred to as periodic pattern analysis, and a spatial distribution of a phase value of the periodic pattern calculated as a result of the analysis is referred to as phase distribution. The periodic pattern includes the interference pattern.

Meanwhile, a technique widely used these days as a technique for periodic pattern analysis includes a phase shift method. According to the present technique, a phase of a periodic pattern of an entire view field is relatively shifted to detect the periodic pattern a plurality of times, and a predetermined calculation using data of the detection result as the input value is performed. According to this, it is possible to calculate the spatial distribution of the phase value.

According to a basic phase shift method, a phase value or the like is calculated by a calculation on the assumption that a phase shift by an expected amount is accurately performed, and information related to the subject (hereinafter, which will be described as subject information) is calculated on the basis of this. In this case, when an error is generated in the phase shift amount due to any factor on an apparatus, an error is also generated in the calculation result. A value of the thus generated error is determined while depending on a wrapped phase values at each position. Thus, the error generally appears in an image as a periodic pattern.

Even in a case where the phase shift by the expected amount is performed or the phase shift method is not used, a similar error may be generated in a case where a profile of the interference pattern strongly contains harmonic components in addition to a fundamental wave, for example.

According to J. Schwider, "Phase shifting interferometry: reference phase error reduction" Appl. Opt., Vol. 28, No. 18, 3889-3892 (1989) (which will be referred to as Non-patent Document 1), as an image processing method for correcting the above-described error generated in the spatial distribution of the phase value calculated from the interference pattern, a method of using a function representing a relationship between a tentative calculation value of the phase and the error value on the basis of partial information within the calculation results is described.

According to the method described in Non-patent Document 1, interferometry using an interference pattern (one-dimensional interference pattern) having a period only in one direction is used.

On the other hand, it may be effective to generate one-dimensional interference patterns having different periodic directions at the same time to form an interference pattern having periods in two or more directions (two-dimensional interference pattern) and use this two-dimensional interference pattern for the measurement. An example of an interferometer for the above-described case includes a two-dimensional Talbot interferometer, or the like.

In a case where the interference measurement is performed by using the two-dimensional interference pattern, it is possible to obtain the phase spatial distributions related to the respective one-dimensional interference patterns by using an appropriate two-dimensional phase shift method. However, in the analysis results of the respective one-dimensional interference patterns, the inventor of the present invention finds a problem that an error caused by the existence of an interference pattern other than the analysis targets may be generated in some cases.

Therefore, according to the error correction method described in Non-patent Document 1, the spatial distribution of the phase value calculated from the above-described two-dimensional interference pattern may not be sufficiently corrected in some cases.

SUMMARY OF THE INVENTION

In view of the above, the present invention provides a computation apparatus in which an effect of an error can be reduced when information of a subject is calculated from a periodic pattern having periods in two or more directions, a program, and an image pickup system.

The present invention in its first aspect provides a computation apparatus as specified in claims 1 to 9.

The present invention in its second aspect provides an image pickup system as specified in claims 10 to 13.

The present invention in its second aspect provides a program as specified in claims 14 and 15.

Further features of the present invention will become apparent from the following description of embodiments with reference to the attached drawings. Each of the embodiments of the present invention described below can be implemented solely or as a combination of a plurality of the embodiments or features thereof where necessary or where the combination of elements or features from individual embodiments in a single embodiment is beneficial.

BRIEF DESCRIPTION OF THE DRAWINGS

Fig. 1 is a function block diagram of a computation apparatus according to a first embodiment mode.

Fig. 2 is a schematic diagram of an image pickup system according to the first embodiment mode.

Fig. 3A is a schematic diagram of a source grating according to the first embodiment mode.

Fig. 3B is a schematic diagram of a phase grating according to the first embodiment mode.

Fig. 3C is a schematic diagram of a self image according to the first embodiment mode.

Fig. 3D is a schematic diagram of a shield grating according to the first embodiment mode.

Fig. 4 is a flow chart of a series of processes according to the first embodiment mode.

Fig. 5 is a flow chart of a series of processes according to a second embodiment mode.

Fig. 6 illustrates a moire obtained according to the first embodiment.

Fig. 7A illustrates a first-order post tilt correction phase distribution obtained according to the first embodiment.

Fig. 7B illustrates a second-order post tilt correction phase distribution obtained according to the first embodiment.

Fig. 7C illustrates the first-order post tilt correction phase distribution obtained according to the first embodiment.

Fig. 7D illustrates the second-order post tilt correction phase distribution obtained according to the first embodiment.

Fig. 8A illustrates a first-order average detection value distribution obtained according to the second embodiment.

Fig. 8B illustrates a second-order average detection value distribution obtained according to the second embodiment.

Fig. 8C illustrates a first-order moire visibility distribution obtained according to the second embodiment.

Fig. 8D illustrates a second-order moire visibility distribution obtained according to the second embodiment.

Fig. 9 illustrates a moire obtained according to a third embodiment.

Fig. 10A illustrates a first-order post tilt correction phase distribution obtained according to the third embodiment.

Fig. 10B illustrates a second-order post tilt correction phase distribution obtained according to the third embodiment.

Fig. 11A illustrates an example of subject data used in a simulation according to a fourth embodiment.

Fig. 11B illustrates an example of reference data used in the simulation according to the fourth embodiment.

Fig. 12A illustrates a first-order post tilt correction phase distribution obtained from the subject data according to the fourth embodiment.

Fig. 12B illustrates a first-order post tilt correction phase distribution obtained from the reference data according to the fourth embodiment.

Fig. 12C illustrates a second-order post tilt correction phase distribution obtained according to the fourth embodiment.

Fig. 13 is a function block diagram of a computation apparatus according to the second embodiment mode.

DESCRIPTION OF THE EMBODIMENTS

Hereinafter, embodiment modes and embodiments of the present invention will be described in detail on the basis of the accompanying drawings. In the respective drawings, the same components are assigned with the same reference numerals, and so any redundant description will be avoided.

As described above, according to the error correction method described in J. Schwider, "Phase shifting interferometry: reference phase error reduction" Appl. Opt., Vol. 28, No. 18, 3889-3892 (1989), interferometry using a one-dimensional interference pattern is used. In addition, the function representing the error only includes the tentative phase distribution of the one-dimensional interference pattern as the variable. However, the inventor of the present invention finds a problem in that, in a case where a two-dimensional interference pattern is used, the error derived from the existence of the component other than the analysis target periodic component is more likely generated as compared with the case of using the one-dimensional interference pattern. For example, in a case where a two-dimensional interference pattern having periods in a first direction and a second direction (which is set as a direction intersecting with the first direction) is used, an error derived from a periodic component in the second direction may be generated in some cases when the first direction is analyzed. This similarly applies even to a periodic pattern formed without using the interference.

In view of the above, the image pickup system according to the present embodiment mode is provided with a computation apparatus that can reduce an error that may be generated in a calculation result when information of the subject is calculated from the two-dimensional periodic pattern.

The computation apparatus calculates an error correction function on the basis of an image pickup result of an image pickup system, and corrects the error generated in the information of the subject by using this error correction function. This error correction function is calculated from the information of the spatial distribution of the first-order phase value corresponding to the tentative calculation of the phase of the periodic pattern, and the information of the spatial distribution of the first-order measurement target value corresponding to the tentative calculation of the measurement target value, and includes the first-order phase value and the first-order measurement target value as the variables. Since the error correction function includes the first-order phase value as the variable, it is possible to perform the error correction at a higher accuracy as compared with the error correction function that does not include the first-order phase value as the variable. For example, in error correction for adding a certain tilt or a curvature factor to the distribution of the first-order measurement target value, the periodic error or the like that depends on the phase of the interference pattern is not corrected at a high accuracy in general. The first-order measurement target value after the correction by using the error correction function in the above-described manner may be referred to as second-order measurement target value in the present specification.

The measurement target value refers to a value of a calculation target by the computation apparatus. For example, in a case where an X-ray Talbot interferometer is used as the image pickup apparatus, the measurement target value includes a value obtained by performing a tilt (inclination) correction on the phase distribution of the detected moire, an average detection value of the X-ray intensity, a visibility value of the detected moire (hereinafter, which may simply be referred to as visibility value), or the like. The value obtained by performing the tilt correction on the phase distribution of the moire (hereinafter, which may be referred to as post tilt correction phase value) includes information of a spatial differential value of the phase distribution of the X-ray generated while the X-ray transmits through the subject (so-called information of a differential phase image of the subject). When the post tilt correction phase value is multiplied by a predetermined coefficient, this can be converted into the X-ray differential phase value generated by the transmission through the subject. The average detection value of the X-ray intensity includes information of an X-ray transmittance distribution of the subject, and the visibility value of the moire includes information of an X-ray small-angle scattering power distribution of the subject.

In the present invention and the present specification, the image pickup is not limited to obtaining the image, it also obtains information related to the subject at each of a plurality of positions. For example, when an apparatus obtains a differential phase value of the X-ray at a first position and a differential phase value of the X-ray at a second position (which is set as a different position from the first position), the apparatus is regarded as the image pickup apparatus.

The computation apparatus can be constituted by a computer including a central processing unit (CPU), a main storage apparatus (a RAM or the like), an auxiliary storage apparatus (an HDD, an SSD, or the like), and various interfaces. Various computations performed by the computation apparatus are realized when programs stored in the auxiliary storage apparatus are loaded to the main storage apparatus and executed by the CPU. Of course, this configuration is merely an example and is not intended to limit the scope of the present invention. For example, instead of the auxiliary storage apparatus, the programs may be loaded to the main storage apparatus via a network or various storage apparatuses.

The error correction function may be calculated by using subject data or may also be calculated by using the reference data. In the present invention and the present specification, the subject data is information of the periodic pattern formed by the light that has been modulated by the subject, and is the information of the periodic pattern formed on the detector when the subject is arranged in an optical path between the light source and the detector of the image pickup apparatus provided to the image pickup system. Since this periodic pattern is formed by the light that has been modulated by the subject, the subject data includes the information of the subject. On the other hand, the reference data is information of the periodic pattern formed by the light that has not been modulated by the subject, and is the information of the periodic pattern formed on the detector when the subject is not arranged in the optical path between the light source and the detector of the image pickup apparatus provided to the image pickup system. Since this periodic pattern is formed by the light that has not been modulated by the subject, the reference data does not include the information of the subject. At this time, an object other than the subject may be arranged in the optical path, but the optical characteristic of the object arranged in the optical path is preferably already found out, or a size of the arranged object is preferably small with respect to an image pickup range.

A case of calculating the error correction function by using the subject data will be described according to a first embodiment mode, and a case of calculating the error correction function by using the reference data will be described according to a second embodiment mode.

First Embodiment Mode

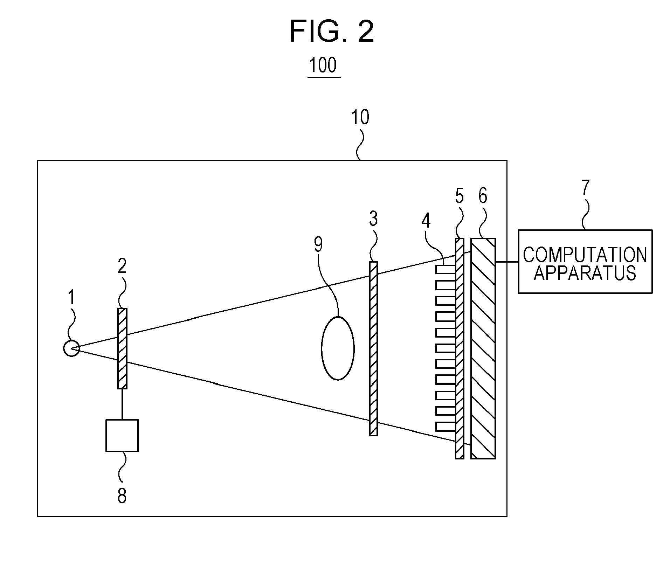

Fig. 2 illustrates a configuration example of an image pickup system 100 according to the first embodiment mode of the present invention. The image pickup system 100 is an X-ray image pickup system that uses X-rays as light, and is provided with an image pickup apparatus 10 that performs X-ray Talbot-Lau interferometry, and a computation apparatus 7. In the present invention and the present specification, the description will be given while X-rays are regarded as a part of the light. The X-rays are set as an electromagnetic ray having photon energy that is higher than or equal to 2 keV and lower than or equal to 100 keV. In addition, as the image pickup apparatus 10 provided to the image pickup system 100, an image pickup apparatus that performs interferometry other than Talbot-Lau interferometry may be used, and also an image pickup apparatus other than an interferometer may also be used so long as the periodic pattern can be formed.

The image pickup apparatus 10 will now be described.

The image pickup apparatus 10 includes an X-ray source 1, a source grating 2 that virtually divides the X-rays from source 1, a phase grating 3 that diffracts the X-rays to form an interference pattern, a shield grating 5 that shields a part of the interference pattern, a detector 6 that detects the X-rays from the shield grating 5, and a positioning stage 8 that moves the source grating 2. The X-rays output from the X-ray source 1 pass through the source grating 2 and form a large number of virtual dotted X-ray sources. The X-rays output from the dotted X-ray sources, constituted by transmission units of the source grating 2, transmit (pass) through the subject 9, and the phase and the intensity are changed in accordance with the composition, density, shape, and the like of the subject 9. The X-rays, where the phase and the intensity are changed by the subject, transmit (pass) through the phase grating 3 to be diffracted, and a self image having a periodic intensity distribution due to Talbot effect is formed. This self image is one type of interference pattern and is formed by the X-rays transmitted through the subject 9. For that reason, the self image is transformed by reflecting the changes in the phase and the intensity of the X-rays by the subject 9. A period of the transmission units of the source grating 2 is determined while following a certain rule. Since the self images formed by all the virtual dotted X-ray sources are overlapped with each other, while being shifted by integral multiples of the period of the self image, it is possible to form a self image 4 having relatively high visibility, and X-ray intensity, at the time same. An amplitude type diffraction grating may also be used instead of the phase grating 3 corresponding to a phase-type diffraction grating.

The shield grating 5 is arranged at a position where the self image 4 is formed. The shield grating 5 has the same period as the self image 4. When the shield grating 5 is subjected to an in-plane rotation with respect to the self image 4, the X-rays that have transmitted through the shield grating 5 can form a moire. Information of this moire is detected by the detector 6, and the computation apparatus 7 calculates the information of the subject on the basis of this detection information. To elaborate, according to the present embodiment, the moire formed by the X-rays that have transmitted (passed) through the shield grating 5 is a periodic pattern subjected to a periodic pattern analysis, and the phase grating 3 and the shield grating 5 are optical elements that form the periodic pattern. Since a period of the moire changes depending on a relative rotation angle between the self image and the shield grating 5, the period of the moire can be adjusted by changing the in-plane rotation amount of the shield grating 5. In addition, the moire may also be formed by slightly changing the period of the self image and the period of the shield grating 5 instead of performing in-plane rotation of the shield grating 5 with respect to the self image. In Fig. 2, the subject is arranged between the source grating 2 and the phase grating 3, but the subject may also be arranged between the phase grating 3 and the shield grating 5. In that case, when the X-rays diffracted by the phase grating 3 transmit (pass) through the subject, the self image reflecting the changes in the phase and the intensity of the X-rays by the subject 9 is formed on the shield grating 5.

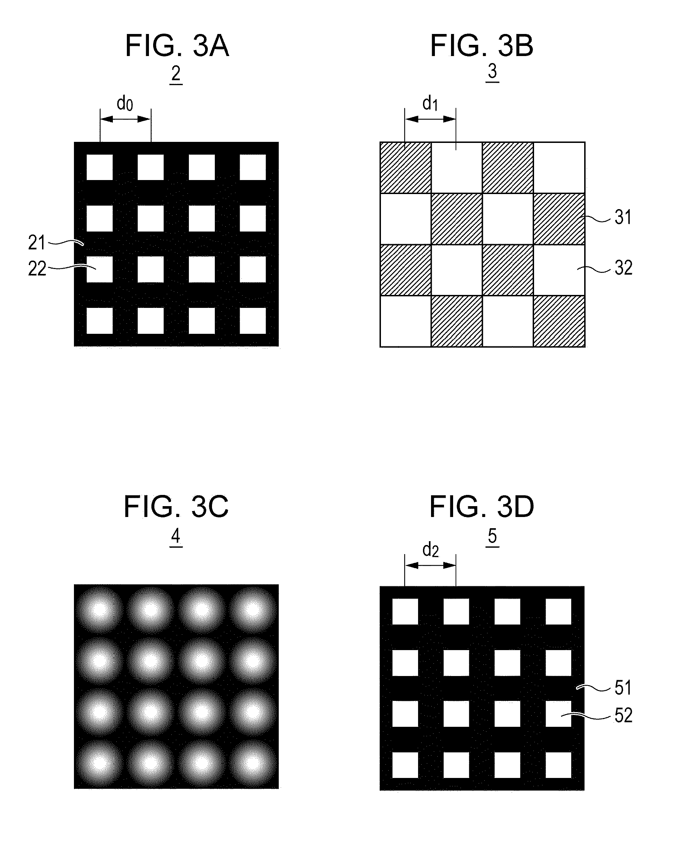

Figs. 3A to 3D respectively illustrate pattern examples of the source grating 2, the phase grating 3, the self image 4 of the phase grating 3 which is formed by the optical system, and the shield grating 5. Fig. 3A illustrates the source grating 2 in which a black part corresponds to an X-ray shielding part 21, and a colorless part corresponds to an X-ray transmission part 22. Fig. 3B illustrates the phase grating 3 in which a hatched part corresponds to a phase advance part 31, and a non-hatched part corresponds to a phase delay part 32. Herein, the X-rays that have transmitted through the phase advance part 31 have a phase advanced by $\pi$rad with respect to the X-rays that have transmitted through the phase delay part 32. An X-ray transmission factor difference between the phase advance part 31 and the phase delay part 32 is set to be sufficiently small. Fig. 3C illustrates the self image 4 in which it is represented that a part closer to the colorless part has a higher X-ray intensity, and a part closer to the black part has a lower X-ray intensity. Fig. 3D illustrates the shield grating 5 in which the black part corresponds to an X-ray shielding part 51, and the colorless part corresponds to an X-ray transmission part 52.

Since the phase of the moire pattern relies on a relative positional relationship between the self image and the shield grating 5, the phase shift method can be performed by performing an in-plane translation of the self image. Herein, the phase shift method is performed by performing translation in the periodic direction of the source grating 2 by the positioning stage 8, and relatively shifting the phase of the moire pattern of the entire view field to perform the detection a plurality of times. The thus detected plurality of pieces of moire information (to elaborate, the subject data) are transmitted to the computation apparatus 7 connected to the detector 6, and the information of the subject is calculated from a change in the detection values between the plurality of pieces of the subject data.

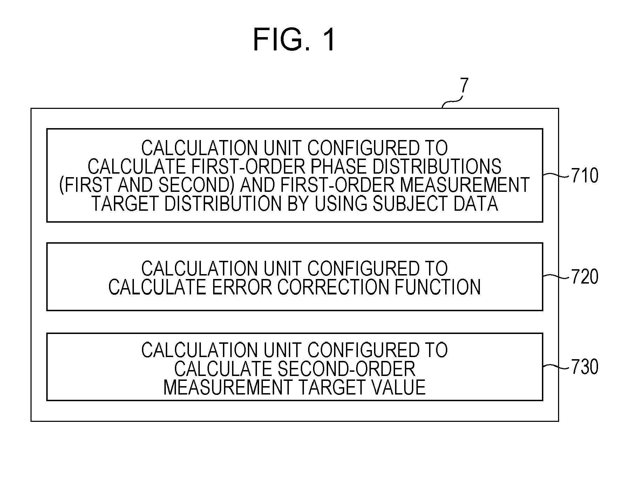

Fig. 1 is a function block diagram of the computation apparatus according to the present embodiment mode.

The computation apparatus 7 includes a calculation unit 710 (which may be referred to as first calculation unit) configured to calculate a spatial distribution of the first-order phase value (which may be referred to as first-order phase distribution), and a spatial distribution of the first-order measurement target value (which may be referred to as the first-order measurement target distribution) by using the subject data. The computation apparatus 7 further includes a calculation unit 720 (which may be referred to as second calculation unit) configured to calculate an error correction function, and a calculation unit 730 (which may be referred to as third calculation unit) configured to calculate a second-order measurement target value. Hereinafter, the respective calculation units will be described.

The first calculation unit subjects the subject data to a periodic pattern analysis to calculate the first-order phase distribution and the first-order measurement target distribution. Any method for the periodic pattern analysis may be employed. According to the present embodiment mode, the moire obtained by the image pickup apparatus 10 is analyzed as the periodic pattern. The first-order phase distribution calculated by the first calculation unit is a spatial distribution of a first-order phase value in the first direction (which may be referred to as first first-order phase value), and a spatial distribution of a first-order phase value in the second direction (which may be referred to as second first-order phase value). The first-order measurement target distribution calculated by the first calculation unit may include the above-described periodic measurement error caused by the phase shift error, or the like.

The measurement target distribution according to the present embodiment mode is at least one of a phase distribution of the moire after a tilt correction, an average detection value distribution of the X-ray intensity, and a visibility distribution of the moire. In the X-ray Talbot interferometer, the spatial distribution after the tilt correction of the phase value of the moire pattern, which is obtained by analyzing the subject data, is a distribution corresponding to a result obtained by performing a spatial differentiation of a phase distribution that has newly been generated when the X-rays transmit through the subject in a certain direction (X-ray differential phase distribution). Since the Talbot interferometer uses the two-dimensional moire pattern according to the present embodiment mode, the X-ray differential phase distributions related to two different differential directions can be obtained on the basis of the phase distributions of the moire pattern related to the first direction and the second direction. The differential directions may not be matched with the first direction and the second direction corresponding to the periodic directions of the moire. The X-ray transmittance distribution of the subject can be obtained from the distribution of the X-ray intensity average detection value (average detection value), which is obtained by removing intensity variations of the X-ray intensity caused by the existence of the moire through averaging by any unit. In addition, the X-ray small-angle scattering power distribution of the subject can be obtained from the distribution of the visibility value of the moire. The small-angle scattering power distribution can be calculated separately for the two different directions similarly as in the X-ray differential phase distribution.

The second calculation unit calculates the error correction function including the first first-order phase value and the second first-order phase value as variables. This error correction function is calculated by using information of a partial area of the first-order measurement target distribution, information of a partial area of the first first-order phase distribution, and information of a partial area of the second first-order phase distribution. In a case where the measurement target value is the post tilt correction phase value, by using the spatial distribution of the first-order post tilt correction phase value as the spatial distribution of the first-order measurement target value, the spatial distribution of the second-order post tilt correction phase value corresponding to the spatial distribution of the second-order measurement target value is calculated. Hereinafter, the spatial distribution of the first-order post tilt correction phase value may be referred to as first-order post tilt correction phase distribution, and the spatial distribution of the second-order post tilt correction phase value may be referred to as second-order post tilt correction phase distribution. At this time, the second-order post tilt correction phase distribution is calculated by using the error correction function calculated from the information of the first-order post tilt correction phase distribution, and the spatial distributions of the first and second first-order phase values (the first and second first-order phase values are first-order phases before the tilt correction). The first-order post tilt correction phase value can be calculated from the first and second first-order phase distributions. Thus, in this case, the error correction function can be substantially calculated only on the basis of the first first-order phase distribution and the second first-order phase distribution. The error correction function calculated from information of a distribution of the first-order average detection value (hereinafter, which may be described as first-order average detection value distribution), and the first and second first-order phase distributions, is used for the correction on the error of the average detection value distribution. The error correction function calculated from information of a distribution of the first-order visibility value (hereinafter, which may be described as first-order visibility value distribution), and the first and second first-order phase distributions, is used for the correction on the error of the visibility distribution.

These pieces of information used for calculating the error correction function preferably correspond to the same area of the periodic pattern. For example, when the periodic pattern has an area denoted by A, the error correction function is preferably calculated by using the information of the first-order measurement target distribution, the information of the first first-order phase distribution, and the information of the second first-order phase distribution which are calculated from this area A.

This error correction function, calculated by the second calculation unit, is a function for outputting the second-order measurement target value corresponding to the measurement target value after the error correction in which the first-order measurement target value is set as an input value. The first-order measurement target value and the first-order phase values (first and second) (hereinafter, the first-order phase values as described refer to the first and second first-order phase values) used for the calculation of the error correction function are preferably the measurement target value and the phase values (first and second) in the area where a manner of the change in the periodic pattern is already found out. For that reason, for example, the error correction function is preferably calculated from the first-order measurement target value and the first-order phase values of an area where the X-rays that have transmitted through an outer side of the subject form the periodic pattern. To elaborate, an area where the X-rays that have reached the detector without transmitting through the subject in the periodic pattern forms the detection intensity distribution. In this manner, the area detected without substantially receiving the influence from the subject in the subject data is referred to as blank area in the present invention and the present specification.

For example, various data analysis methods such as a method of using curvature fitting to the measured error pattern can be used for the calculation of the error correction function. In addition, a trigonometric function or the like for representing the error correction function can be used. In the present invention and the present specification, the calculation of the error correction function also includes obtaining the error correction function by assigning a value to a predetermined function. For example, an assignment of a value or a function determined on the basis of the analysis result in the blank area to an undecided coefficient in a function previously stored in the auxiliary storage apparatus, is also regarded as the calculation of the error correction function. Moreover, for example, a determination on a coefficient in a function by referring to a table, representing a relationship between the calculation result by the first calculation unit and the coefficient in the function, is also regarded as the calculation of the error correction function.

The third calculation unit calculates the spatial distribution of the second-order measurement target value (hereinafter, which may be described as second-order measurement target distribution) by using the error correction function calculated by the second calculation unit and the first-order measurement target distribution, and the first-order phase distribution calculated by the first calculation unit. Specifically, the first-order phase distribution, and the first-order measurement target distribution, are assigned to the error correction function calculated by the second calculation unit to calculate the spatial distribution of the second-order measurement target value. That is, the first-order phase values and the first-order measurement target value are assigned to the error correction function to calculate the second-order measurement target value for a plurality of coordinate systems, so that the spatial distribution of the second-order measurement target value is calculated. In the present invention and the present specification, the operation in which the assignment of the first-order phase values and the first-order measurement target value is performed for the plurality of coordinate systems in the above-described manner, refers to the assignment of the first-order phase distribution and the first-order measurement target distribution.

When the error correction function is calculated by the second calculation unit, a same measurement target distribution as the measurement target for correcting the error is used. To elaborate, in a case where the error of the first-order post tilt correction phase distribution is corrected in the third calculation unit, at the time of the calculation of the error correction function in the second calculation unit, the first-order post tilt correction phase distribution is used as the first-order measurement target distribution.

According to the present embodiment mode, by assigning the first-order phase distribution and the first-order measurement target distribution in the entire area of the subject data, to the variable parts of the error correction function calculated by using the first-order phase distribution and the first-order measurement target distribution in the partial area of the subject data, the second-order measurement target distribution in the entire area of the subject data is calculated. According to the present embodiment mode, the second-order measurement target distribution calculated by the third calculation unit is treated as the information of the subject, but the computation apparatus 7 may further perform various computations with respect to the second-order measurement target distribution. In addition, the second-order measurement target distribution may be transmitted to an image display apparatus connected to the computation apparatus, or transmitted to the auxiliary storage apparatus to be stored in the auxiliary storage apparatus.

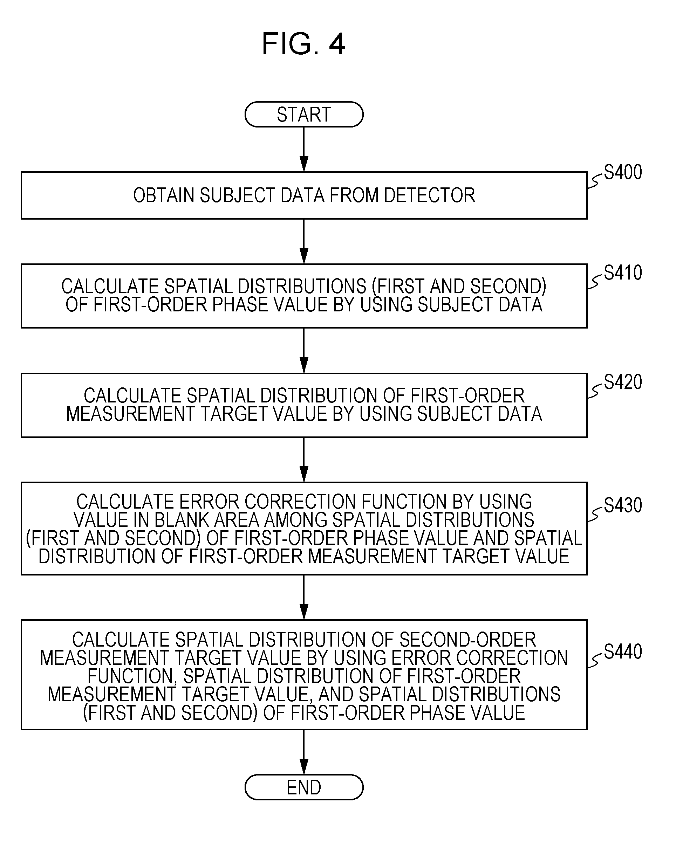

Fig. 4 is a flow chart for computation processing procedures performed by the computation apparatus according to the present embodiment mode.

First, the computation apparatus obtains the subject data from the detector (S400). The detector and the computation apparatus may not physically be connected to each other in adjacent positions and may be connected to each other via a wireless communication, a LAN, the internet, or the like. Next, the first first-order phase distribution corresponding to a tentative calculation value of the phase distribution in the first direction, and the second first-order phase distribution corresponding to a tentative calculation value of the phase distribution in the second direction of the subject data are calculated by using the subject data (S410). Subsequently, the first-order measurement target distribution is calculated by using the subject data (S420). In a case where the distribution of the first-order post tilt correction phase value is used as the first-order measurement target distribution, it is possible to calculate the first-order measurement target distribution from the first-order phase distribution. In the above-described case too, if the first-order phase distribution is calculated by using the subject data, it is regarded that the first-order measurement target distribution is also calculated by using the subject data. Then, the error correction function is calculated by using the value in the blank area among the first-order measurement target distribution and the first-order phase distribution (S430). Then, by using the calculated error correction function, the first-order measurement target distribution, and the first-order phase distribution, the spatial distribution of the second-order measurement target value is calculated (S440). This flow may not be carried out in the above-described order. For example, S420 may be carried out before S410.

Second Embodiment Mode

A computation apparatus according to the second embodiment mode is different from the computation apparatus according to the first embodiment mode in that the error correction function is calculated by using the reference data instead of the blank area of the subject data.

The present embodiment mode is an effective embodiment mode in a case where an error generation factor has a repeatability. As an example of the above-described case, a case in which a phase shift error has a certain repeatability due to a reason in terms of the apparatus, a case in which the detected periodic pattern includes certain higher harmonic components, and the like are conceivable. Since the image pickup system according to the present embodiment mode is the same as the first embodiment mode except for the computation processing performed by the computation apparatus, the description of the redundant part will be omitted.

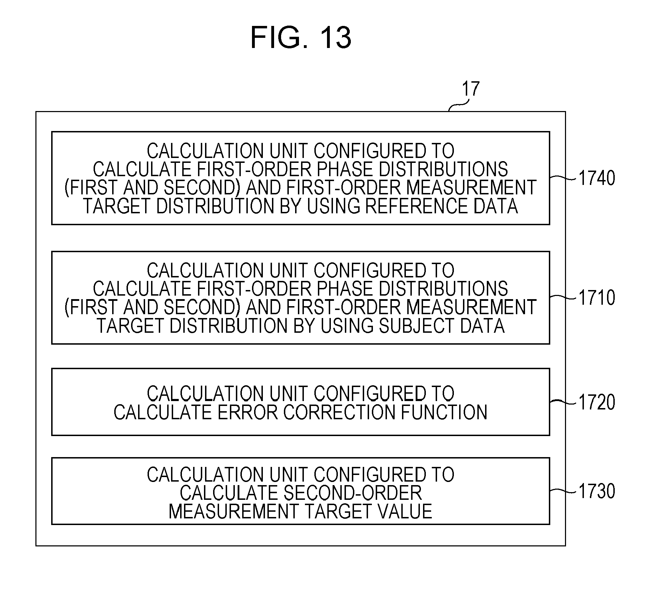

Fig. 13 is a function block diagram of a computation apparatus 17 according to the present embodiment mode.

The computation apparatus 17 has the calculation unit 1710 configured to calculate the first-order phase distribution and the first-order measurement target distribution by using the subject data, the calculation unit 1720 configured to calculate the error correction function, and the calculation unit 1730 configured to calculate the second-order measurement target value. These calculation units are similar to the calculation units in the computation apparatus 7 according to the first embodiment mode. In addition to these calculation units, the computation apparatus 17 according to the present embodiment mode further includes a calculation unit 1740 configured to calculate the first and second first-order phase distributions and the first-order measurement target distribution from the reference data (which may be referred to as fourth calculation unit). The calculation unit configured to calculate the error correction function is different from the first embodiment mode in that the error correction function is calculated by using the information of the first and second first-order phase values, and the first-order measurement target value calculated from the reference data. Hereinafter, the first-order phase distribution calculated by using the subject data may be referred to as the first-order phase distribution of the subject data, and the first-order measurement target distribution calculated by using the subject data may be referred to as the first-order measurement target distribution of the subject data. Similarly, the first-order phase distribution calculated by using the reference data may be referred to as the first-order phase distribution of the reference data, and the first-order measurement target distribution calculated by using the reference data may be referred to as the first-order measurement target distribution of the reference data. Hereinafter, the respective calculation units will be described.

A calculation unit (first calculation unit) 1710 configured to calculate the first-order phase distribution and the first-order measurement target distribution by using the subject data, performs a periodic pattern analysis of the subject data. According to this, the first-order measurement target distribution of the subject data (at least one of the first-order post tilt correction phase distribution, the first-order moire visibility distribution, and the first-order average detection value distribution) and the first-order phase distribution of the subject data (the first-order phase distribution before the tilt correction) are calculated. Since the first calculation unit is similar to the first calculation unit according to the first embodiment mode, a detailed description thereof will be omitted.

A calculation unit (second calculation unit) 1720 configured to calculate the error correction function, calculates the error correction function on the basis of the information of the partial area of the first-order measurement target distribution and the first-order phase distribution calculated by using the reference data. Since the reference data does not include the information of the subject, the manner of the change in the periodic pattern can be found out in the entire reference data. Thus, the error correction function may be calculated by using the information of the entire first-order measurement target distribution and the entire first-order phase distribution calculated by using the reference data. The spatial distribution of the first-order measurement target value of the reference data, and the spatial distribution of the first-order phase value of the reference data are calculated by the fourth calculation unit which will be described below. Although the information used for the calculation of the error correction function varies, the calculation method of the error correction function, the representation, and the like are similar to the first embodiment mode. For example, various data analysis techniques such as a technique using the curvature fitting to the measured error pattern can be used for the calculation of the error correction function. The error correction function calculated by the second calculation unit includes the first first-order phase value and the second first-order phase value as the variables. The error correction function is calculated by using the first-order measurement target value and the first-order phase values calculated by using the reference data. In the calculated error correction function, the first-order measurement target value and the first-order phase values indicate the first-order measurement target value and the first-order phase values of the general periodic pattern obtained by using the same apparatus. To elaborate, when the first-order measurement target value and the first-order phase values calculated by using the data of the general periodic pattern, are assigned to the first-order measurement target value, and the first-order phase values included as the variables in the error correction function calculated by using the reference data, the error of the assigned first-order measurement target value can be corrected. The subject data is included in the data of the general periodic pattern.

A calculation unit (third calculation unit) 1730 configured to calculate the second-order measurement target value, calculates the spatial distribution of the second-order measurement target value by correcting the spatial distribution of the first-order measurement target value of the subject data by using the error correction function calculated by the second calculation unit. For the calculation of the spatial distribution of the second-order measurement target value, the error correction function calculated by the second calculation unit, the first-order measurement target distribution of the subject data calculated by the first calculation unit, and the first-order phase distribution are used. Since the third calculation unit according to the present embodiment mode is similar to the third calculation unit according to the first embodiment mode, a detailed description thereof will be omitted.

A calculation unit (fourth calculation unit) 1740 configured to calculate the first-order phase distribution and the first-order measurement target distribution from the reference data, performs the periodic pattern analysis of the reference data to calculate the first-order phase distribution of the reference data and the first-order measurement target distribution. The first-order measurement target distribution and the first-order phase distribution corresponding to the entire reference data may be calculated, and the first-order measurement target distribution and the first-order phase distribution corresponding to only an area used for the calculation of the error correction function among the reference data may also be calculated.

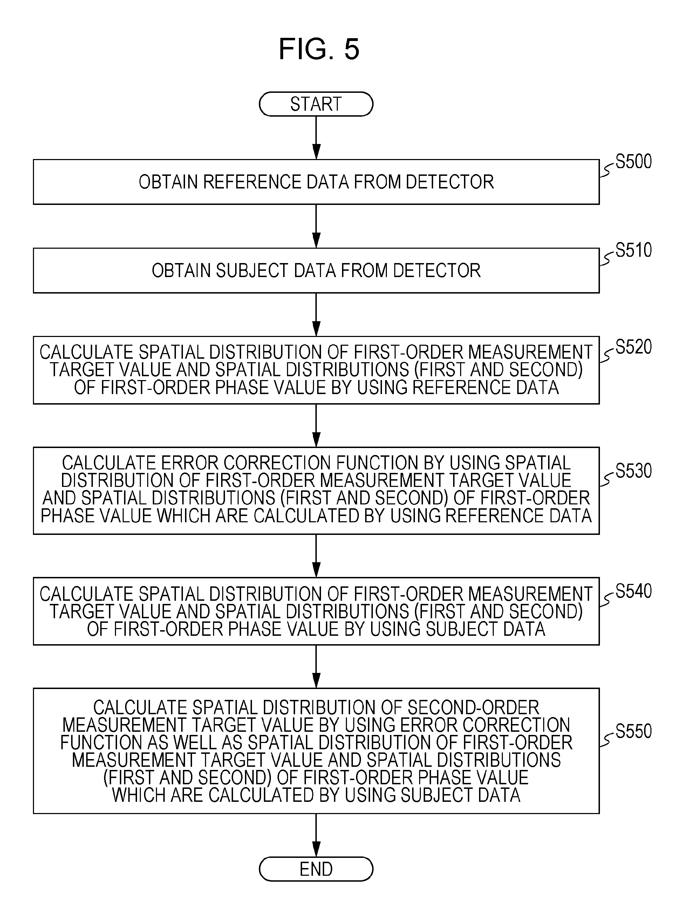

Fig. 5 is a flow chart of computation processing procedures performed by the computation apparatus 17 according to the present embodiment mode. The computation apparatus 17 first obtains the reference data from the detector (S500). Similarly as in the first embodiment mode, the detector and the computation apparatus 17 may not physically be connected to each other in adjacent positions. Next, the subject data is obtained from the detector (S510). Then, the first-order measurement target distribution and the first-order phase distribution are calculated by using the reference data (S520), and the error correction function is calculated by using at least a part of the first-order measurement target distribution and the first-order phase distribution (S530). Subsequently, the first-order measurement target distribution and the first-order phase distribution are calculated by using the subject data (S540), and the spatial distribution of the second-order measurement target value is calculated by using the calculated error correction function, the first-order measurement target distribution of the subject data, and the first-order phase distribution of the subject data (S550).

This flow may not necessarily be carried out in the above-described order. For example, S540 may be carried out before S530.

According to the present embodiment mode, the reference data is obtained separately from the subject data. According to this, since the error correction function can be calculated without creating the blank area in the subject data, it is possible to perform the image pickup of the subject in a state in which the subject exists in the entire image pickup area. In general, at the time of the measurement by the interferometer, before or after the subject data is obtained, the data that does not include the subject used for the error correction derived from the incompleteness of the optical element, or the like from the measurement result, is often detected, but such data may be used as the above-described reference data.

Hereinafter, more specific embodiments of the respective embodiment modes will be described.

First Embodiment

A first embodiment is a specific embodiment of the first embodiment mode.

The X-ray source 1 is an X-ray source using a molybdenum target, and a generated X-ray has an energy spectrum having a peak of a characteristic X-ray at a position of 17.5 keV. The patterns of the source grating 2, the phase grating 3, and the shield grating 5 are similar to those illustrated in Figs. 3A, 3B, and 3D. The X-ray shielding part of the source grating 2 is formed of gold having a thickness of 50.0 $\mu$m. A period do is set as 23.6 $\mu$m, and a width of the X-ray transmission part is set as 11.8 $\mu$m. The phase grating 3 is made of silicon, and a center distance $d_1$ between the adjacent phase advance part and the phase delay part is set as 6.00 $\mu$m. A thickness of the phase advance part of the phase grating 3 is thicker than the phase delay part by 22.3 $\mu$m, and with this setting, it is possible to provide a phase difference of $\pi$rad with respect to the transmitted X-rays at 17.5 keV. The X-ray shielding part of the shield grating 5 is formed of gold having a thickness of 50.0 $\mu$m. A period $d_2$ is set as 8.04 $\mu$m, and a width of the X-ray transmission part is set as 4.02 $\mu$m. A distance $L_1$ between the source grating 2 and the phase grating 3 is set as 1.00 m, and a distance $L_2$ between the phase grating 3 and the shield grating 5 is set as 341 mm.

According to the first embodiment, the periodic pattern analysis based on the phase shift method (two-dimensional phase shift method) is performed with respect to the two directions of the first direction (x direction) and the second direction (y direction). With the slight in-plane rotation of the shield grating 5, the period of the moire detected by the detector 6 is adjusted to have an appropriate length shorter than a width of the detection area.

The two-dimensional phase shift method used according to the first embodiment will be described below. Herein, for simplicity, the moire is represented by a product of respective single sign waves related to the x direction and the y direction. At this time, an X-ray intensity detection value $I_n$ in a pixel in the moire image detected in the n-th turn in the phase shift method is represented as follows.

$$I_n = I_0 \left[ 1 + V_x \cos\left( \Phi_x + \varphi_{x,n} \right) \right]\left[ 1 + V_y \cos\left( \Phi_y + \varphi_{y,n} \right) \right] \quad (1)$$

Where $I_0$ denotes an average detection value, $V_x$ and $V_y$ denote the visibility of the moire in the x and y directions, and $\varphi_{x,n}$ and $\varphi_{y,n}$ denote phase shift values of the moire related to the x and y directions in the n-th moire. $\Phi_x$ and $\Phi_y$ denote phase values of the moire in the x and y directions at the time of $\varphi_{x,n} = \varphi_{y,n} = 0$. It is however noted that the phase values of the moire refer to one where the periodic pattern is a moire among the phase values of the periodic pattern.

According to the present phase shift method, the phase shift while $2\pi/3$ is set as one unit related to the x and y directions is performed, and the moire detection is performed by nine times in total.

That is, the phase shift of the moire is carried out as in the following expressions (2) and (3).

$$\varphi_{x,n} = 0, \frac{2\pi}{3}, \frac{4\pi}{3}, \quad 0, \frac{2\pi}{3}, \frac{4\pi}{3}, \quad 0, \frac{2\pi}{3}, \frac{4\pi}{3} ;$$
$$n = 1,2,\dots,9 \quad (2)$$

$$\varphi_{y,n} = 0, 0, \quad 0, \quad \frac{2\pi}{3}, \quad \frac{2\pi}{3}, \quad \frac{2\pi}{3}, \quad \frac{4\pi}{3}, \quad \frac{4\pi}{3}, \quad \frac{4\pi}{3} ;$$
$$n = 1,2,\dots,9 \quad (3)$$

At this time, the first-order average detection value is set as $I_0'$, the first-order moire phase values in the x and y directions at the time of $\varphi_{x, n} = \varphi_{y, n} = 0$ are set as $\Phi_x'$ and $\Phi_y'$, and the first-order visibility values in the x and y directions are set as $V_x'$ and $V_y'$, these can respectively be calculated by using the following expressions (4) to (8).

$$I_0' = \frac{1}{9}\sum_{k=1}^{9} I_k \qquad (4)$$

$$\Phi_x' = arg\left[\sum_{l=1}^{3}\sum_{k=1}^{3} I_{3(k-1)+1}\ exp\left(-2\pi i\frac{l-1}{3}\right)\right] \qquad (5)$$

$$\Phi_y' = arg\left[\sum_{l=1}^{3}\sum_{k=1}^{3} I_{k+3(l-1)}\ exp\left(-2\pi i\frac{l-1}{3}\right)\right] \qquad (6)$$

$$V_x' = 2\frac{\left|\sum_{l=1}^{3}\sum_{k=1}^{3} I_{3(k-1)+1}\ exp\left(-2\pi i\frac{l-1}{3}\right)\right|}{\sum_{k=1}^{9} I_k} \qquad (7)$$

$$V_y' = 2\frac{\left|\sum_{l=1}^{3}\sum_{k=1}^{3} I_{k+3(l-1)}\ exp\left(-2\pi i\frac{l-1}{3}\right)\right|}{\sum_{k=1}^{9} I_k} \qquad (8)$$

When $\varphi_{x, n}$ and $\varphi_{y, n}$ do not have an error, that is, the conditions are as represented by the expressions (2) and (3), $I_0' = I_0$, $\Phi_x' = \Phi_x$, $\Phi_y' = \Phi_y$, $V_x' = V_x$, and $V_y' = V_y$ are established. It is however noted that the actually calculated $\Phi_x'$ and $\Phi_y'$ are wrapped phases.

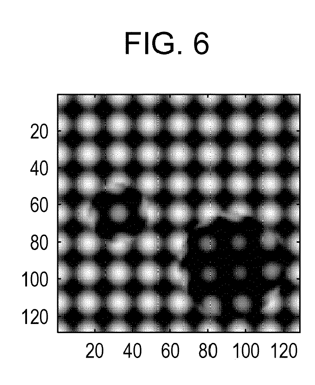

Fig. 6 illustrates a moire used for a simulation according to the present embodiment. This moire is created by supposing the moire obtained by the above-described interferometer. Herein, a spherical object is used as the subject 9.

According to the present embodiment, a case in which the post tilt correction distribution of the moire phase is set as the measurement target distribution will be described.

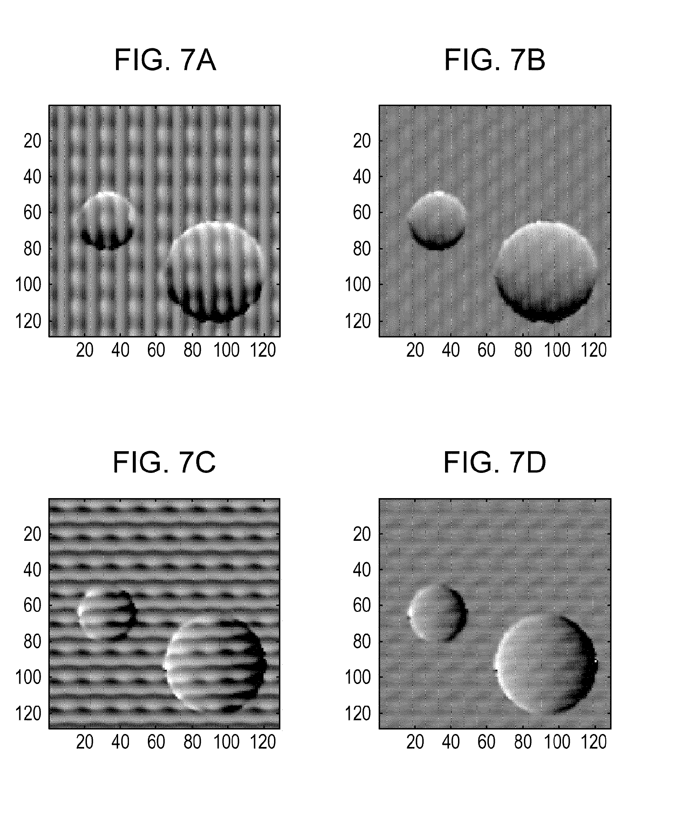

Figs. 7A and 7C illustrate images created on the basis of the phase values of the moire (that is, the first-order phase values) $\Phi_x'$ and $\Phi_y'$ in the x and y directions (horizontal and vertical directions in Fig. 6), which are calculated by the first calculation unit by using the subject data accompanying nine phase shifts in total including Fig. 6 and the expressions (5) and (6). Herein, the images illustrated in Figs. 7A and 7C are values after the tilt correction is applied to the spatial distributions of $\Phi_x'$ and $\Phi_y'$. To elaborate, the spatial distributions of the post tilt correction values of the moire phase.

The two-dimensional periodic pattern seen in Figs. 7A and 7C are due to the phase shift errors with respect to the two directions intentionally applied to the moire in the simulation.

Figs. 7B and 7D illustrate results of computation processing using the error correction function on Figs. 7A and 7C corresponding to the first-order post tilt correction phase distribution. To elaborate, Figs. 7B and 7D are images based on the second-order post tilt correction phase distribution calculated by the third calculation unit. According to the present embodiment, the error correction function is calculated by the second calculation unit on the basis of the information of the first-order post tilt correction phase distributions $\Phi_x''$ and $\Phi_y''$ and the first-order pre tilt correction phase distributions $\Phi_x'$ and $\Phi_y'$ in the blank area equivalent to the upper right part in Fig. 6. Then, the error correction processing is performed by assigning the first-order post tilt correction phase distributions ($\Phi_x''$, $\Phi_y''$) in the x direction and the y direction to the calculated error correction function, to calculate the second-order post tilt correction phase distribution. To elaborate, the distributions of the first-order post tilt correction phase values $\Phi_x''$ and $\Phi_y''$ are used as the first-order measurement target distributions, and the distributions of $\Phi_x'$ and $\Phi_y'$ are used as the first-order phase distributions to calculate the error correction function. The error correction function used herein can be represented by the following expressions (9) and (10) when the second-order post tilt correction phase distributions are set as $\Phi_x'''$ and $\Phi_y'''$.

$$\Phi_x''' = \Phi_x'' + \sum_{l=1}^{3}\sum_{k=l-3}^{3-l} a_{\Phi_x'', k, l} \cos\left(k\Phi_x' + l\Phi_y' + \psi_{\Phi_x'', k, l}\right) + \sum_{k=1}^{3} a_{\Phi_x'', k, 0} \cos\left(k\Phi_x' + \psi_{\Phi_x'', k, 0}\right) \quad (9)$$

$$\Phi_y''' = \Phi_y'' + \sum_{l=1}^{3}\sum_{k=l-3}^{3-l} a_{\Phi_y'', k, l} \cos\left(k\Phi_x' + l\Phi_y' + \psi_{\Phi_y'', k, l}\right) + \sum_{k=1}^{3} a_{\Phi_y'', k, 0} \cos\left(k\Phi_x' + \psi_{\Phi_y'', k, 0}\right) \quad (10)$$

Herein, $a_{\Phi''x, k, l}$, $a_{\Phi''y, k, l}$, $\psi_{\Phi''x, k, l}$, and $\psi_{\Phi''y, k, l}$ for respective (k, l) are numeric values determined from the result of the data analysis in the course of the above-described calculation of the error correction function. According to the present embodiment, the second calculation unit determines on these numeric values, and the error correction function is calculated.

By assigning the first-order post tilt correction phase distribution and the first-order phase distributions calculated from the subject data to each of the expressions (9) and (10), it is possible to calculate the second-order post tilt correction phase distribution.

In the expressions (9) and (10), as an example of the error correction function, the error correction function is configured with a limitation on a term where a value of |k| + |l| is 3 or lower, but depending on a pattern of the error to be targeted for the correction, a term where the value of |k| + |l| is 4 or higher may also be added.

Each of the expressions (9) and (10) is the error correction function for correcting the error by adding values including the first-order phase distributions ($\Phi_x'$, $\Phi_y'$) as the variables to the first-order measurement target distributions ($\Phi_x''$, $\Phi_y''$). Since the second term in the expressions (9) and (10) has a term including $\Phi_x'$ and $\Phi_y'$ at the same time, a correction on the error pattern that is not to be determined by only either of those can be performed. Herein, the above-described error pattern is equivalent to an error component appearing as a periodic error in an oblique direction different from both the x direction and the y direction (to elaborate, a direction intersecting with both the x direction and the y direction) in the area where the subject does not exist, for example. In this manner, in a case where the information of the subject is calculated from the periodic pattern having the periods in two or more directions, the error correction function that has a term including the first-order phase values in the two or more directions as the variables is preferably used.

When the error correction is performed by the addition of the term including the first-order phase values as the variables as described above, the distribution of the value added to the first-order measurement target value may be similar to the distribution of the value simply determined by the positional coordinates. However, since the distribution of the added value is fundamentally determined by the first-order phase values, it is possible to perform the error correction at a higher accuracy particularly in the area where the periodic pattern is distorted by the existence of the subject or the like.

As represented by the expressions (9) and (10), in a case where the error correction on the analysis result of the periodic pattern having the periods in the two or more directions is performed, by using a cos function including the first-order phase values of the respective periodic components as the variables, it is possible to correct the periodic errors in the same directions as the respective periodic components. Furthermore, it is possible to correct the periodic errors related to directions that are not matched with the respective periodic directions by using the cos function including the first-order phase values of the respective periodic components as the variables at the same time.

When Figs. 7B and 7D are compared with Figs. 7A and 7C, the periodic error in Figs. 7B and 7D is smaller, and it may be understood that the effect of the error derived from the phase shift error is reduced.

Second Embodiment

A second embodiment is another embodiment of the first embodiment mode.

According to the present embodiment, the spatial distribution of the average detection value and the spatial distribution of the moire visibility value are used as the measurement target distributions. Thus, the first-order average detection value $I_0'$ obtained as the first-order measurement target distribution by the expression (4) and the spatial distributions of the first-order visibilities $V_x'$ and $V_y'$ in the x and y directions obtained by the expressions (7) and (8) are used. Since a fundamental difference in the discussions on the images related to the x direction and the y direction does not exist, hereinafter, only the image related to the x direction is represented as a figure indicating the correction effect. Configurations of the X-ray source and the interferometer are similar to those according to the first embodiment.

With regard to the correction on the first-order average detection value ($I_0'$) and the first-order visibility values ($V_x'$, $V_y'$), the error correction function where a certain value determined by $\Phi_x'$ and $\Phi_y'$ in the expressions (9) and (10) is added to the first-order measurement result does not correctly function in many cases. Instead, for example, the error correction function where the first-order measurement target value is divided by the value determined by the first-order phase values is preferably used as represented by the following expressions (11) to (13).

$$I_0'' = I_0' \left[ 1 + \sum_{l=1}^{3} \sum_{k=l-3}^{3-l} a_{I_0', k, l} \cos\left( k\Phi_x' + l\Phi_y' + \psi_{I_0', k, l} \right) \right.$$

$$\left. + \sum_{k=1}^{3} a_{I_0', k, 0} \cos\left( k\Phi_x' + \psi_{I_0', k, 0} \right) \right]^{-1} \quad (11)$$

$$V_x'' = V_x' \left[ 1 + \sum_{l=1}^{3} \sum_{k=l-3}^{3-l} a_{V_x', k, l} \cos\left( k\Phi_x' + l\Phi_y' + \psi_{V_x', k, l} \right) \right.$$

$$\left. + \sum_{k=1}^{3} a_{V_x', k, 0} \cos\left( k\Phi_x' + \psi_{V_x', k, 0} \right) \right]^{-1} \quad (12)$$

$$V_y'' = V_y' \left[ 1 + \sum_{l=1}^{3} \sum_{k=l-3}^{3-l} a_{V_y', k, l} \cos\left( k\Phi_x' + l\Phi_y' + \psi_{V_y', k, l} \right) \right.$$

$$\left. + \sum_{k=1}^{3} a_{V_y', k, 0} \cos\left( k\Phi_x' + \psi_{V_y', k, 0} \right) \right]^{-1} \quad (13)$$

Where $I_0''$, $V_x''$, and $V_y''$ are respectively values after the error corrections on $I_0'$, $V_x'$, and $V_y'$ and are the second-order measurement target values. In addition, $a_{I0', k, l}$, $a_{Vx', k, l}$, $a_{Vy', k, l}$, $\psi_{I0', k, l}$, $\psi_{Vx', k, l}$, and $\psi_{Vy', k, l}$ with respect to the respective (k, l) are numeric values determined by the result of the data analysis. According to the present embodiment, the second calculation unit determines these numeric values to calculate the error correction function. The first-order measurement target value and the first and second phase values in the blank area are used for the calculation of the error correction function. Similarly as in the first embodiment, each of the distributions ($I_0'$, $V_x'$, $V_y'$) of the first measurement values calculated from the subject data and the first-order phase distributions ($\Phi_x'$, $\Phi_y'$) are assigned to each of the expressions (11) to (13), so that it is possible to calculate each of the distributions ($I_0''$, $V_x''$, $V_y''$) of the second-order measurement target value. At this time, the distribution of the value that divides the first-order measurement target value may be similar to the distribution of the value simply determined by the positional coordinates but fundamentally determined by the first-order phase values, so that it is possible to perform the error correction at a higher accuracy. In addition, similarly as in the first embodiment, as an example of the error correction function, the error correction function is configured with a limitation on a term where a value of $|k| + |l|$ is 3 or lower in the expressions (11) to (13), but depending on a pattern of the error to be targeted for the correction, a term where the value of $|k| + |l|$ is 4 or higher may also be added.

In the expressions (11) to (13), since a second term inside a part that divides the first-order measurement target value has $\Phi_x'$ and $\Phi_y'$ at the same time, a correction of the error pattern that is not to be determined by only either of those can be performed. Similarly as in the first embodiment, the above-described error pattern is equivalent to the error component appearing as the periodic error in the oblique direction different from both the x direction and the y direction (to elaborate, the direction intersecting with both the x direction and the y direction) in the area where the subject does not exist, for example. In this manner, in a case where the information of the subject is calculated from the periodic pattern having the periods in two or more directions, the error correction function that has a term including the first-order phase values in the two or more directions as the variables is preferably used.

Moreover, as represented in the expressions (11) to (13), in a case where the error correction of the analysis result of the periodic pattern having the periods in the two or more directions is performed, it is possible to correct the periodic errors in the same directions as the respective periodic components by using the cos function including the first-order phase values of the respective periodic components as the variables. Furthermore, it is possible to correct the periodic errors related to directions that are not matched with the respective periodic directions by using the cos function including the first-order phase values of the respective periodic components as the variables at the same time.

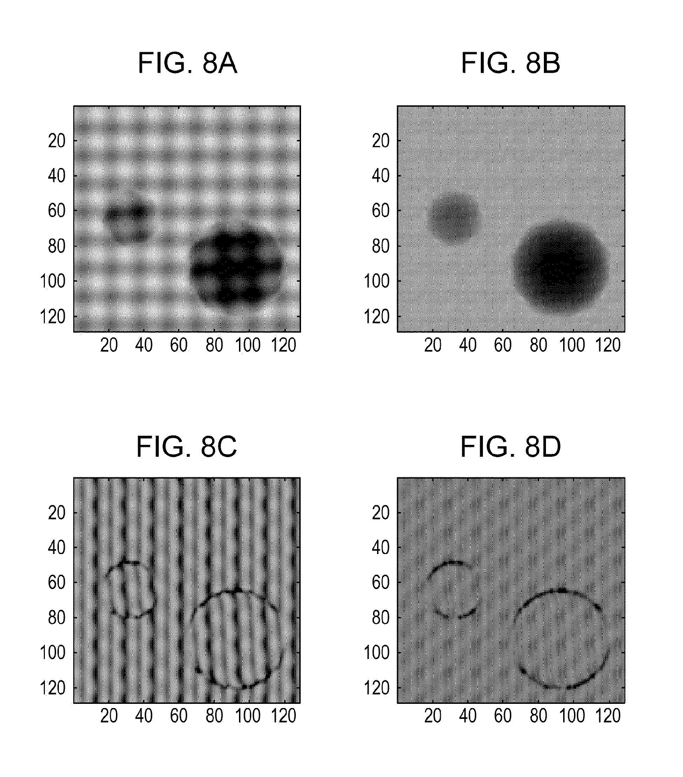

By using the same subject data as that according to the first embodiment, the spatial distribution of the first-order average detection value $I_0'$ and the spatial distribution of the first-order visibility $V_x'$ are calculated as the first-order measurement target distributions. Fig. 8A illustrates an image based on the spatial distribution of the first-order average detection value $I_0'$, and Fig. 8C illustrates an image based on the spatial distribution of the first-order visibility $V_x'$. Fig. 8B illustrates an image based on the spatial distribution of the second-order average detection value $I_0''$ calculated by correcting this spatial distribution of the first-order average detection value $I_0'$ illustrated in Fig. 8A by using the error correction function represented in the above-described expression (11). Fig. 8D illustrates an image based on the spatial distribution of the second-order visibility $V_x''$ calculated by correcting the spatial distribution of the first-order visibility $V_x'$ illustrated in Fig. 8C by using the error correction function represented in the above-described expression (12).

When Figs. 8B and 8D are compared with Figs. 8A and 8C, the periodic error in Figs. 8B and 8D is smaller, and it may be understood that the influence of the error derived from the phase shift error is reduced.

In this manner, when the error correction function including the first and second first-order phase distributions as the variables is used, the error correction processing can also be performed on the spatial distribution of the average detection value and the spatial distribution of the visibility.

Third Embodiment

A third embodiment is still another embodiment of the first embodiment mode. The present embodiment is different from the first embodiment in that a Fourier transform method is used as the method for the pattern analysis instead of the phase shift method. Configurations of the X-ray source and the interferometer are similar to those according to the first embodiment.

Since a detail of the Fourier transform method is described in M. Takeda et al. "Fourier-transform method of fringe-pattern analysis for computer-based topography and interferometry", J. Opt. Soc. Am., Vol. 72, No. 1, 156-160 (1982), a description thereof will be omitted herein.

In a case where the information of the subject is calculated from the periodic pattern by using the Fourier transform method, an error derived from a peak in the vicinity of a carrier frequency peak such as the zero-order peak in a Fourier spectrum of the periodic pattern may easily be generated. For that reason, according to the present embodiment, the above-described error is considered as the correction target. At this time, the error correction function can be represented by the following expressions (14) and (15), for example.

$$\Phi_x''' = \Phi_x'' + a_{\Phi_z', 1, 0} \cos\left(\Phi_x' + \psi_{\Phi_z', 1, 0}\right)$$

$$+ a_{\Phi_z', 0, 1} \cos\left(\Phi_y' + \psi_{\Phi_z', 0, 1}\right)$$

$$+ a_{\Phi_z', 1, 1} \cos\left(\Phi_x' + \Phi_y' + \psi_{\Phi_z', 1, 1}\right)$$

$$+ a_{\Phi_z', -1, 1} \cos\left(-\Phi_x' + \Phi_y' + \psi_{\Phi_z', -1, 1}\right) \qquad (14)$$

$$\Phi_y''' = \Phi_y'' + a_{\Phi_\gamma', 1, 0} \cos\left(\Phi_x' + \psi_{\Phi_\gamma', 1, 0}\right)$$

$$+ a_{\Phi_\gamma', 0, 1} \cos\left(\Phi_y' + \psi_{\Phi_\gamma', 0, 1}\right)$$

$$+ a_{\Phi_\gamma', 1, 1} \cos\left(\Phi_x' + \Phi_y' + \psi_{\Phi_\gamma', 1, 1}\right)$$

$$+ a_{\Phi_\gamma', -1, 1} \cos\left(-\Phi_x' + \Phi_y' + \psi_{\Phi_\gamma', -1, 1}\right) \qquad (15)$$

$\Phi_x''$ and $\Phi_y''$ are the first-order post tilt correction phase distributions calculated by the Fourier transform method similarly as in the first embodiment. The configuration in which the error is corrected by adding the values including the first-order phase distributions ($\Phi_x'$, $\Phi_y'$) as the variables to the first-order measurement target distributions ($\Phi_x''$, $\Phi_y''$) in the respective expressions (14) and (15) is also similar to the first embodiment. According to the Fourier transform method, in general, the tilt correction on the moire phase is performed by moving the spectrum in the vicinity of the peak corresponding to a carrier frequency in a Fourier space to the origin. However, with regard to the first-order phase distributions (distributions of $\Phi_x'$, $\Phi_y'$) used for the error correction function according to the present embodiment, the phase distributions calculated without performing this spectrum movement, that is, the phase distributions before the tilt correction is performed are to be used as the first-order phase distributions.

The second term and the third term of the expressions (14) and (15) are terms for correcting the error components the values of which can respectively be determined by only $\Phi_x'$ and $\Phi_y'$ and are terms for correcting the periodic errors where the periodic directions are respectively matched with the x direction and the y direction in the area where the subject does not exist. The fourth term and the fifth term are terms for correcting the error components the values of which can respectively be determined by $\Phi_x' + \Phi_y'$ and $-\Phi_x' + \Phi_y'$, and are terms for correcting the periodic errors where the periodic directions are different from the x and y directions by 45 degrees in the area where the subject does not exist. To elaborate, similarly as in the expressions (9) and (10) according to the first embodiment, this is the error correction function including the terms for correcting the periodic errors having the different periodic directions from the directions of the periodic component set as the analysis target (which refer to the fourth term and the fifth term in the expressions (14) and (15)) in the area where the subject does not exist.

Since the error correction function includes the first-order phase values as the variables, the correction accuracy is improved as compared with the case in which the correction amount is determined simply by the positional coordinates, as is the case in the first embodiment. In addition, the effective error correction can be performed since the error correction function includes the cos function including the first-order phase values of the respective periodic components as the variables as is the case in the first embodiment.

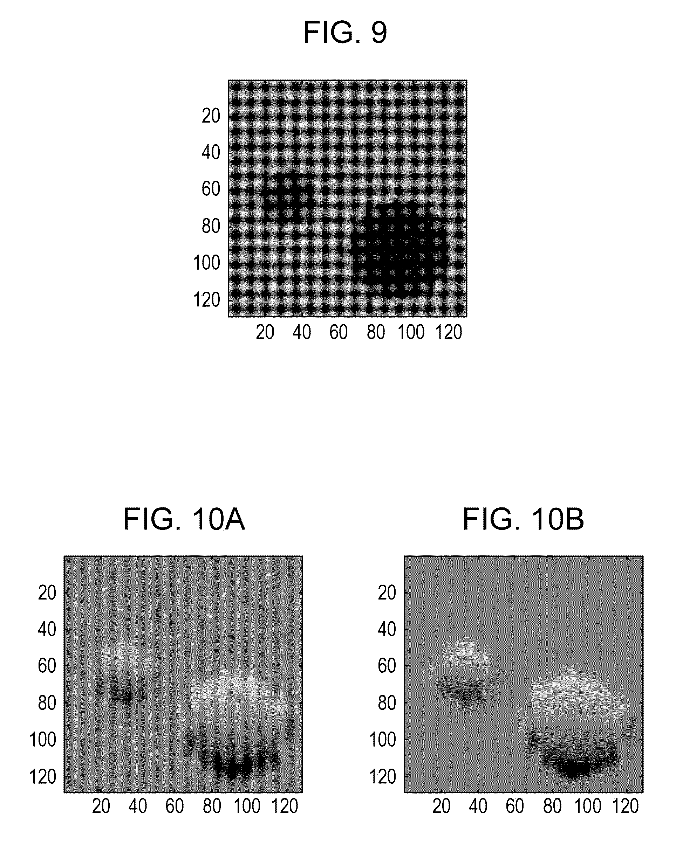

Fig. 9 illustrates a moire used for the simulation according to the present embodiment and is created while the moire obtained by the above-described interferometer is used.

Fig. 10A illustrates an image based on the first-order post tilt correction phase distribution $\Phi_x''$ calculated by using the moire of Fig. 9. Fig. 10B illustrates an image based on the second-order post tilt correction phase distribution

$\Phi_x'''$ obtained by applying the above-described error correction function expression (14) to the first-order post tilt correction phase distribution $\Phi_x''$. To elaborate, Fig. 10A illustrates an image based on the distribution of the first-order measurement target value calculated by the first calculation unit, and Fig. 10B illustrates an image based on the distribution of the second-order measurement target value calculated by the third calculation unit.

When Fig. 10A is compared with Fig. 10B, the periodic error is smaller in Fig. 10B, and it may be understood that the influence of the error derived from the peaks in the vicinity of the carrier frequency in the Fourier spectrum of the moire is reduced in the moire phase distribution.

In this manner, the first embodiment mode can also be applied to the first-order measurement target distribution by the Fourier transform method.

Fourth Embodiment

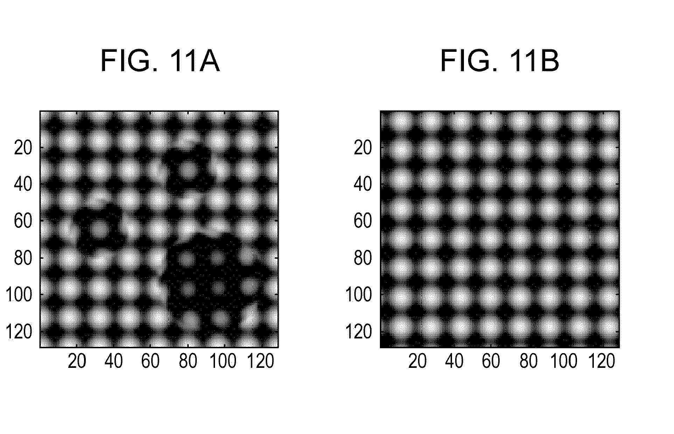

A fourth embodiment is an embodiment of the second embodiment mode. The configuration of the interferometer is similar to the first embodiment. Fig. 11A illustrates an example of the subject data used for a simulation according to the present embodiment, and Fig. 11B illustrates an example of the reference data used for the simulation according to the present embodiment. Figs. 11A and 11B are created while the moire obtained by the above-described interferometer is used.

According to the present embodiment, the two-dimensional phase shift method of calculating the information of the subject from the nine pieces of moire information is performed similarly as in the first embodiment. Herein, it is assumed that the relative phase shift errors between, the data obtainment performed by nine times respectively at the time of obtaining the subject data and at the time of obtaining the reference data, are the same. It is however noted that the overall moire phases (to elaborate, relative positions of the interference pattern and the shield grating 5) at the time of respectively obtaining the first data are not matched with each other.

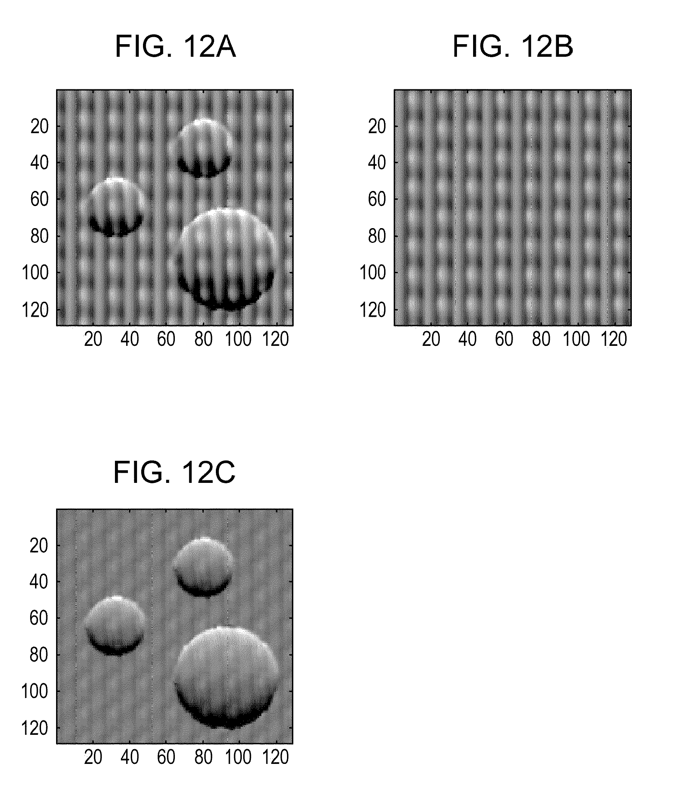

Figs. 12A and 12B illustrate images based on the first-order post tilt correction phase distribution (distribution of $\Phi_x''$) calculated by using the expression (5) or the like on the basis of the nine pieces each of the subject data and the reference data in total including Figs. 11A and 11B. According to the present embodiment, a case will be described in which the first-order post tilt correction phase value $\Phi_x''$ is used as the first-order measurement target value. Information of the first-order post tilt correction phase distribution (distribution of $\Phi_x''$) of the reference data and the first-order phase distributions (distributions of $\Phi_x'$, $\Phi_y'$) of the reference data is calculated in the fourth calculation unit. Then, by using the first-order post tilt correction phase distribution of the reference data and the first-order phase distributions of the reference data calculated in the fourth calculation unit, the error correction function having the same form as the expression (9) is calculated in the second calculation unit. Then, the second-order post tilt correction phase distribution $\Phi_x'''$, after the error correction, is calculated in the third calculation unit by assigning the first-order phase distribution of the subject data and the first-order post tilt correction phase distribution of the subject data to the error correction function calculated by the second calculation unit. Fig. 12C illustrates an image based on the second-order post tilt correction phase distribution $\Phi_x'''$.

When Fig. 12A is compared with Fig. 12C, the periodic error is smaller in Fig. 12C, and it may be understood that the influence of the error derived from the phase shift error is reduced. In this manner, in a case where the repeatability exists in the error generation factor, even when the error correction function is calculated by using the reference data, the sufficient effect can be attained. Even in a case where the repeatability of the error generation factor is low, the error correction function calculated by using the reference data can be used, but the error correction function calculated by using the subject data is preferably used as in the first embodiment mode.

Other Embodiments

Embodiments of the present invention can also be realized by a computer of a system or apparatus that reads out and executes computer executable instructions recorded on a storage medium (e.g., non-transitory computer-readable storage medium) to perform the functions of one or more of the above-described embodiment(s) of the present invention, and by a method performed by the computer of the system or apparatus by, for example, reading out and executing the computer executable instructions from the storage medium to perform the functions of one or more of the above-described embodiment(s). The computer may comprise one or more of a central processing unit (CPU), micro processing unit (MPU), or other circuitry, and may include a network of separate computers or separate computer processors. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to embodiments, it is to be understood that the invention is not limited to the disclosed embodiments. The scope of the following claims is to be accorded the broadest interpretation so as to encompass all such modifications and equivalent structures and functions.

**Claims**

1. A computation apparatus for calculating information of a subject by using subject data,
   wherein the subject data is information of a periodic pattern formed by light that has been modulated by the subject, and
   wherein the periodic pattern has periods in a first direction and a second direction, the computation apparatus comprising:

   a calculation unit (710) configured to calculate a spatial distribution of a first first-order phase value corresponding to a phase value of the periodic pattern related to the first direction, a spatial distribution of a second first-order phase value corresponding to a phase value of the periodic pattern related to the second direction, and a spatial distribution of a first-order measurement target value, by using the subject data;
   a calculation unit (720) configured to calculate an error correction function, including the first first-order phase value and the second first-order phase value as variables, by using information of the spatial distribution of the first first-order phase value, information of the spatial distribution of the second first-order phase value, and information of the spatial distribution of the first-order measurement target value; and
   a calculation unit (730) configured to calculate information of a spatial distribution of a second-order measurement target value, corresponding to a spatial distribution obtained by correcting the spatial distribution of the first-order measurement target value, by using the information of the spatial distribution of the first first-order phase value, the information of the spatial distribution of the second first-order phase value, and the information of the spatial distribution of the first-order measurement target value.

2. The computation apparatus according to Claim 1, wherein the periodic pattern formed by light that has been modulated by the subject is a first periodic pattern, and
   wherein the calculation unit (720) configured to calculate the error correction function calculates the error correction function using information of the first first-order phase value, the second first-order phase value, and the first-order measurement target value, in an area of a second periodic pattern formed by light that has not been modulated by the subject among the subject data.

3. A computation apparatus for calculating information of a subject by using subject data and reference data,
   wherein the subject data is information of a first periodic pattern formed by light that has been modulated by the subject,
   wherein the reference data is information of a second periodic pattern formed by light that has not been modulated by the subject, and
   wherein each of the subject data and the reference data is information of the respective first and second periodic patterns having periods in a first direction and a second direction, the computation apparatus comprising:

   a calculation unit (1740) configured to calculate a spatial distribution of a first first-order phase value corresponding to a phase value in the first direction, a spatial distribution of a second first-order phase value corresponding to a phase value in the second direction, and a spatial distribution of a first-order measurement target value, by using the reference data;
   a calculation unit (1710) configured to calculate a spatial distribution of a first first-order phase value corresponding to a phase value in the first direction, a spatial distribution of a second first-order phase value corresponding to a phase value in the second direction, and a spatial distribution of a first-order measurement target value, by using the subject data;
   a calculation unit (1720) configured to calculate an error correction function, including a first first-order phase value and a second first-order phase value of the periodic pattern as variables, by using information of the spatial distribution of the first first-order phase value, the spatial distribution of the second first-order phase value, and the spatial distribution of the first-order measurement target value calculated by using the reference data; and
   a calculation unit (1730) configured to calculate a distribution of a second-order measurement target value, corresponding to a distribution obtained by correcting the spatial distribution of the first-order measurement target value calculated by using the subject data, by using the error correction function, and information of the spatial distribution of the first first-order phase value, information of the spatial distribution of the second first-order phase value, and information of the spatial distribution of the first-order measurement target value calculated, by using the subject data.

4. The computation apparatus according to any one of Claims 1 to 3,
wherein the calculation unit, configured to calculate the spatial distribution of the first first-order phase value, the spatial distribution of the second first-order phase value, and the spatial distribution of the first-order measurement target value by using the subject data, calculates the spatial distribution of the first first-order phase value, the spatial distribution of the second first-order phase value, and the spatial distribution of the first-order measurement target value, from a change in a detection value between plural pieces of the subject data, and
wherein a phase of the periodic pattern is shifted between the plural pieces of the subject data.

5. The computation apparatus according to any one of Claims 1 to 4,
wherein the spatial distribution of the first-order measurement target value calculated by using the subject data is at least one of a spatial distribution of the phase value of the periodic pattern, the spatial distribution of the average detection value, and the spatial distribution of the visibility.

6. The computation apparatus according to Claim 5,
wherein the spatial distribution of the first-order measurement target value calculated by using the subject data is a spatial distribution of the phase value of the periodic pattern, and
wherein the error correction function is a function in which values including the spatial distribution of the first first-order phase value and the spatial distribution of the second first-order phase value as the variables are added to the spatial distribution of the first-order measurement target value.

7. The computation apparatus according to Claim 6,
wherein the error correction function is a function in which a term including the spatial distribution of the first first-order phase value and the spatial distribution of the second first-order phase value, as the variables, is added to the spatial distribution of the first-order measurement target value.

8. The computation apparatus according to Claim 5,
wherein the spatial distribution of the first-order measurement target value calculated by using the subject data is at least one of a spatial distribution of the phase value of the periodic pattern, the spatial distribution of the average detection value, and the spatial distribution of the visibility, and
wherein the error correction function is a function in which the spatial distribution of the first-order measurement target value is divided by values including the spatial distribution of the first first-order phase value and the spatial distribution of the second first-order phase value as the variables.

9. The computation apparatus according to Claim 8,
wherein the error correction function is a function in which the spatial distribution of the first-order measurement target value is divided by values including the spatial distribution of the first first-order phase value and the spatial distribution of the second first-order phase value as the variables.

10. An image pickup system comprising:

an image pickup apparatus (10) including a detector configured to detect a periodic pattern; and
a computation apparatus (7) configured to calculate information of a subject by using subject data detected by the detector,
wherein the detector is configured to detect the subject data by detecting the periodic pattern on the detector when the subject is arranged in an optical path between a light source and the detector, and
wherein the computation apparatus is the computation apparatus as described in any one of Claims 1 to 9.

11. The image pickup system according to Claim 10,
wherein a period of the periodic pattern is shorter than a width of a detection range of the detector.

12. The image pickup system according to Claim 10 or 11,
wherein the image pickup apparatus includes a light source, an optical element configured to form a periodic pattern by light output from the light source, and the detector.

13. The image pickup system according to Claim 12,
wherein the light source is an X-ray source,
wherein the optical element is an X-ray optical element configured to form the periodic pattern by X-rays output from the X-ray source, and

wherein the detector is an X-ray detector configured to detect the X-rays from the optical element.

14. A program for calculating information of a subject by using subject data,
wherein the subject data is information of a periodic pattern formed by light that has been modulated by the subject,
wherein the periodic pattern has periods in a first direction and a second direction, and
wherein the program causes a computation apparatus to execute the steps of:

calculating a spatial distribution of a first first-order phase value corresponding to a phase value in the first direction, a spatial distribution of a second first-order phase value corresponding to a phase value in the second direction, and a spatial distribution of a first-order measurement target value, by using the subject data,
calculating an error correction function including the first first-order phase value and the second first-order phase value as variables, by using information of the spatial distribution of the first first-order phase value, the spatial distribution of the second first-order phase value, and the spatial distribution of the first-order measurement target value, and
calculating information of a spatial distribution of a second-order measurement target value, corresponding to a spatial distribution obtained by correcting the spatial distribution of the first-order measurement target value, by using the error correction function, information of the spatial distribution of the first first-order phase value, information of the spatial distribution of the second first-order phase value, and information of the spatial distribution of the first-order measurement target value.

15. A program for calculating information of a subject by using subject data and reference data,
wherein the subject data is information of a first periodic pattern formed by light that has been modulated by the subject,
wherein the reference data is information of a second periodic pattern formed by light that has light that has not been modulated by the subject,
wherein each of the subject data and the reference data is information of the respective first and second periodic patterns having periods in a first direction and a second direction, and
wherein the program causes a computation apparatus to execute the following steps:

calculating a spatial distribution of a first first-order phase value corresponding to a phase value in the first direction, a spatial distribution of a second first-order phase value corresponding to a phase value in the second direction, and a spatial distribution of a first-order measurement target value, by using the reference data,
calculating a spatial distribution of a first first-order phase value corresponding to a phase value in the first direction, a spatial distribution of a second first-order phase value corresponding to a phase value in the second direction, and a spatial distribution of a first-order measurement target value, by using the subject data, and
calculating an error correction function including a first first-order phase value and a second first-order phase value of the periodic pattern as variables, by using information of the spatial distribution of the first first-order phase value, the spatial distribution of the second first-order phase value, and the spatial distribution of the first-order measurement target value calculated by using the reference data, and
calculating a distribution of a second-order measurement target value, corresponding to a distribution obtained by correcting the spatial distribution of the first-order measurement target value calculated by using the subject data, by using the error correction function and the information of the spatial distribution of the first first-order phase value, the information of the spatial distribution of the second first-order phase value, and the information of the spatial distribution of the first-order measurement target value calculated, by using the subject data.

# FIG. 1

7

| CALCULATION UNIT CONFIGURED TO CALCULATE FIRST-ORDER PHASE DISTRIBUTIONS (FIRST AND SECOND) AND FIRST-ORDER MEASUREMENT TARGET DISTRIBUTION BY USING SUBJECT DATA | 710 |

| CALCULATION UNIT CONFIGURED TO CALCULATE ERROR CORRECTION FUNCTION | 720 |

| CALCULATION UNIT CONFIGURED TO CALCULATE SECOND-ORDER MEASUREMENT TARGET VALUE | 730 |

# FIG. 2

100

COMPUTATION APPARATUS

# FIG. 3A
## 2

$d_0$

21
22

# FIG. 3B
## 3

$d_1$

31
32

# FIG. 3C
## 4

# FIG. 3D
## 5

$d_2$

51
52

# FIG. 4

START

OBTAIN SUBJECT DATA FROM DETECTOR — S400

CALCULATE SPATIAL DISTRIBUTIONS (FIRST AND SECOND) OF FIRST-ORDER PHASE VALUE BY USING SUBJECT DATA — S410

CALCULATE SPATIAL DISTRIBUTION OF FIRST-ORDER MEASUREMENT TARGET VALUE BY USING SUBJECT DATA — S420

CALCULATE ERROR CORRECTION FUNCTION BY USING VALUE IN BLANK AREA AMONG SPATIAL DISTRIBUTIONS (FIRST AND SECOND) OF FIRST-ORDER PHASE VALUE AND SPATIAL DISTRIBUTION OF FIRST-ORDER MEASUREMENT TARGET VALUE — S430

CALCULATE SPATIAL DISTRIBUTION OF SECOND-ORDER MEASUREMENT TARGET VALUE BY USING ERROR CORRECTION FUNCTION, SPATIAL DISTRIBUTION OF FIRST-ORDER MEASUREMENT TARGET VALUE, AND SPATIAL DISTRIBUTIONS (FIRST AND SECOND) OF FIRST-ORDER PHASE VALUE — S440

END

# FIG. 5

START

OBTAIN REFERENCE DATA FROM DETECTOR — S500

OBTAIN SUBJECT DATA FROM DETECTOR — S510

CALCULATE SPATIAL DISTRIBUTION OF FIRST-ORDER MEASUREMENT TARGET VALUE AND SPATIAL DISTRIBUTIONS (FIRST AND SECOND) OF FIRST-ORDER PHASE VALUE BY USING REFERENCE DATA — S520

CALCULATE ERROR CORRECTION FUNCTION BY USING SPATIAL DISTRIBUTION OF FIRST-ORDER MEASUREMENT TARGET VALUE AND SPATIAL DISTRIBUTIONS (FIRST AND SECOND) OF FIRST-ORDER PHASE VALUE WHICH ARE CALCULATED BY USING REFERENCE DATA — S530

CALCULATE SPATIAL DISTRIBUTION OF FIRST-ORDER MEASUREMENT TARGET VALUE AND SPATIAL DISTRIBUTIONS (FIRST AND SECOND) OF FIRST-ORDER PHASE VALUE BY USING SUBJECT DATA — S540

CALCULATE SPATIAL DISTRIBUTION OF SECOND-ORDER MEASUREMENT TARGET VALUE BY USING ERROR CORRECTION FUNCTION AS WELL AS SPATIAL DISTRIBUTION OF FIRST-ORDER MEASUREMENT TARGET VALUE AND SPATIAL DISTRIBUTIONS (FIRST AND SECOND) OF FIRST-ORDER PHASE VALUE WHICH ARE CALCULATED BY USING SUBJECT DATA — S550

END

FIG. 6

FIG. 7A

FIG. 7B

FIG. 7C

FIG. 7D

FIG. 8A

FIG. 8B

FIG. 8C

FIG. 8D

# FIG. 9

# FIG. 10A

# FIG. 10B

# FIG. 11A

# FIG. 11B

## FIG. 12A

## FIG. 12B

## FIG. 12C

# FIG. 13

17

| CALCULATION UNIT CONFIGURED TO CALCULATE FIRST-ORDER PHASE DISTRIBUTIONS (FIRST AND SECOND) AND FIRST-ORDER MEASUREMENT TARGET DISTRIBUTION BY USING REFERENCE DATA | 1740 |

| CALCULATION UNIT CONFIGURED TO CALCULATE FIRST-ORDER PHASE DISTRIBUTIONS (FIRST AND SECOND) AND FIRST-ORDER MEASUREMENT TARGET DISTRIBUTION BY USING SUBJECT DATA | 1710 |

| CALCULATION UNIT CONFIGURED TO CALCULATE ERROR CORRECTION FUNCTION | 1720 |

| CALCULATION UNIT CONFIGURED TO CALCULATE SECOND-ORDER MEASUREMENT TARGET VALUE | 1730 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. SCHWIDER.** Phase shifting interferometry: reference phase error reduction. *Appl. Opt.,* 1989, vol. 28 (18), 3889-3892

- **M. TAKEDA et al.** Fourier-transform method of fringe-pattern analysis for computer-based topography and interferometry. *J. Opt. Soc. Am.,* 1982, vol. 72 (1), 156-160